# FASCICULE DE BREVET EUROPEEN

(11) **EP 0 601 952 B1**
(45) Date de publication et mention de la délivrance du brevet: **26.08.1998**
(21) Numéro de dépôt: 93490002.8
(22) Date de dépôt: 05.03.1993
(51) Int. Cl.: A23L 1/01, A23B 7/005, A23L 3/18

(54) **Procédé de traitement thermique de produits alimentaires, notamment de cuisson de légumes, et dispositif pour sa mise en oeuvre**
Verfahren zur thermischen Behandlung von Nahrungsmitteln, insbesondere zum Kochen von Gemüse und Anlage zur Durchführung des Verfahrens
Process for heat-treating foodstuffs, especially for cooking vegetables and apparatus for implementing it

(30) Priorité: 07.12.1992 FR 9214987
(43) Date de publication de la demande: 15.06.1994
(73) Titulaire: BONDUELLE, F-59173 Renescure (FR)
(72) Inventeur: Jude, Albert, F-59173 Renescure (FR)
(74) Mandataire: Duthoit, Michel

(56) Documents cités:
- EP-A- 0 073 095
- EP-A- 0 442 281
- DE-A- 1 962 428
- FR-A- 2 674 100
- GB-A- 1 335 443
- GB-A- 1 388 774
- US-A- 4 214 013
- US-A- 4 214 013
- US-A- 4 543 263

## Description

La présente invention a pour objet un procédé de traitement thermique de produits alimentaires notamment de cuisson de légumes et un dispositif pour la mise en oeuvre de ce procédé ainsi que les produits obtenus par ce procédé.

L'industrie de la conservation des légumes sous forme surgelée ou sous forme appertisée est une activité saisonnière qui nécessite le traitement des légumes immédiatement après leur récolte.

C'est la raison pour laquelle, les différentes étapes de conservation de ces légumes et de préparation de ceux-ci doivent être réalisées rapidement afin que l'ensemble de la récolte puisse être traitée. En outre, dans de telles industries, le traitement d'un nombre élevé de tonnes de légumes doit être réalisé en un temps réduit pour éviter les dégradations de ces légumes qui seraient préjudiciables à la fabrication de produits surgelés de qualité.

En outre, la préparation des légumes nécessite la mise en oeuvre d'étapes de traitement thermique par chauffage qui doivent répondre à des critères de débit important tout en respectant l'intégralité des propriétés des légumes c'est-à-dire notamment leur couleur, leur saveur, leurs qualités nutritives et organoleptiques, leur texture et l'intégralité de leurs formes.

Pour neutraliser les enzymes contenus dans les légumes afin d'obtenir une bonne qualité de conservation de ceux-ci, on réalise une étape de chauffage communément appelé "blanchiment" préalablement à leur préparation.

Pour blanchir les légumes, on les ébouillante pendant une période de l'ordre de quelques minutes dans un bain d'eau chaude portée à une température d'environ 96 °C, ce qui permet de fixer leur saveur et leur couleur sans réaliser leur cuisson.

Une méthode traditionnelle de cuisson des aliments hors récipients consiste à plonger ces légumes dans un bain d'eau chauffée à 96 °C comme pour leur blanchiment, et à les y maintenir par immersion ou par aspersion pendant une durée d'environ 10 à 15 mn c'est-à-dire pendant un temps correspondant sensiblement à 10 fois la durée du blanchiment. Toutefois, une telle cuisson des légumes confère à ceux-ci un aspect hétérogène en couleur et en texture ce qui diminue la qualité du produit.

En outre, le séjour prolongé des légumes dans l'eau de cuisson réduit leur poids ce qui conduit à une perte non négligeable des produits alimentaires. Une telle perte en produits alimentaires accroît considérablement le prix de revient de fabrication de ces surgelés et donc leur prix de vente.

Par ailleurs, le temps de cuisson des légumes en vrac, selon cette méthode traditionnelle nécessite un temps relativement long ce qui est préjudiciable notamment dans une chaîne de préparation de légumes devant traiter un grand tonnage de légumes en un laps de temps réduit.

Pour remédier à ces inconvénients, on connaît également, notamment du document EP-A-73.095, un procédé de cuisson plus rapide des légumes en vrac dans lequel on soumet ces derniers à une pression supérieure à la pression atmosphérique à l'intérieur d'une enceinte dans laquelle on injecte de la vapeur d'eau.

Toutefois, en pratique, ce procédé n'apporte pas satisfaction puisqu'il conduit à la détérioration des légumes et de ce fait il ne peut être mis en oeuvre que pour des légumes destinés à être transformés en purée, en flocons ou destinés à tout autre usage dans lequel le légume n'apparaît plus dans sa forme et dans sa couleur initiale.

En effet, ce phénomène de détérioration est dû principalement au fait que les légumes chauffés sous une pression supérieure à la pression atmosphérique se transforme de façon brutale à la pression atmosphérique tandis que leur température est encore supérieure à la température d'ébullition de l'eau à la dite pression atmosphérique.

Etant donné, que lors de leur cuisson, les légumes présentent une quantité importante d'eau ou de vapeur d'eau à une température supérieure à 100 °C, cette chute de pression brutale s'accompagne d'une importante augmentation du volume de l'eau par vaporisation.

Cette augmentation du volume de l'eau crée alors, entre les fibres structurelles constitutives du légume une multitude de distorsions générant des phénomènes de dislocation détruisant la structure externe du légume et une perte en poids non négligeable.

Par ailleurs, étant donnée la durée importante du traitement thermique que subissent ces légumes, on observe également, une modification de leur couleur et de leur texture.

Cette détérioration de la couleur et de la saveur des légumes est d'autant plus préjudiciable, que celle-ci s'opère de façon hétérogène ce qui est préjudiciable à la qualité recherchée pour le produit surgelé.

Par ailleurs, on connaît des documents US-A-4.214.013 et GB-A-1.388.774 des procédés de traitement thermique de légumes dans lesquels les produits sont traités, sous pression, par immersion dans un liquide.

Comme évoqué précédemment, ces procédés présentent l'inconvénient de provoquer des pertes de poids en légumes.

On connaît également, du document GB-A-1.335.443, un autocuiseur dans lequel des produits alimentaires tels que de la viande, de la volaille ou du poisson sont cuits suivant un procédé de traitement thermique discontinu qui risque donc de constituer un noeud d'engorgement dans une chaîne de préparation de légumes.

On connaît aussi, des documents FR-A-2.674.100 et EP-A-442.281, des procédés de traitement thermique de produits alimentaires dans lesquels ces derniers sont respectivement blanchis par aspersion ou pasteurisés par immersion dans un liquide. Ces deux procédés fonctionnent à pression atmosphérique et ne permettent pas d'obtenir des températures assez élevées pour une cuisson rapide.

Du document US-4.543.263, on connaît également un procédé de traitement thermique en continu de produits alimentaires dans lequel lesdits produits sont stérilisés en les soumettant à la vapeur dans une enceinte sous pression, puis refroidis par aspersion d'un liquide maintenant les produits sous pression.

Cependant, selon ce document américain, le traitement est effectué dans des enceintes séparées, afin notamment d'éviter le mélange des différentes phases dans lesquelles se retrouvent les fluides caloporteurs utilisés pour ledit traitement.

Une telle mise en oeuvre ne permet pas de cuire les légumes tout en leur conservant un aspect extérieur irréprochable, puisque les produits sont manutentionnés sans précaution et subissent de nombreuses chutes d'une enceinte à l'autre.

La présente invention a pour objet de remédier aux inconvénients des procédés de traitement thermique notamment de cuisson de légumes actuellement connus en fournissant un procédé qui permet de cuire les légumes en leur conservant leur intégralité de couleur, de saveur, de qualités nutritives et de texture.

Un autre but du procédé conforme à l'invention réside dans le fait qu'il permet de traiter un grand tonnage de légumes pendant un temps minimum comme cela est nécessaire dans l'industrie de la conservation.

Un autre avantage du procédé conforme à l'invention réside dans le fait qu'il est simple à mettre en oeuvre et qu'il est conçu pour permettre le traitement thermique de produits alimentaires, notamment de cuisson, de légumes, et/ou de blanchiment de ces légumes.

Un autre avantage du procédé conforme à l'invention réside dans le fait qu'il permet de réaliser des produits surgelés comportant un mélange hétérogène de légumes cuits, tels que de la macédoine à partir de différents légumes dont la cuisson de chacun a été parfaitement contrôlée de façon idéale, ce qui confère aux produits les qualités recherchées.

Un autre avantage du procédé conforme à l'invention réside dans le fait qu'il peut être mis en oeuvre pour le traitement thermique et, notamment la cuisson, de tout type de légumes ce qui en accroît les capacités d'utilisation.

Un avantage du procédé pour la mise en oeuvre du dispositif conforme à l'invention réside dans le fait qu'il est d'une conception simple, robuste tout en offrant toutes les garanties d'hygiène nécessaires au traitement de tels produits alimentaires.

Un autre avantage du dispositif conforme à l'invention réside dans le fait qu'il comporte des moyens de régulation et de contrôle des différents paramètres de l'opération de traitement thermique des produits alimentaires ce qui permet d'obtenir un produit de qualité.

D'autres buts et avantages de la présente invention apparaîtront au cours de la description qui va suivre qui n'est donnée qu'à titre indicatif et qui n'a pas pour but de la imiter.

A cette fin, l'invention a pour objet un procédé de traitement thermique en continu de produits alimentaires en vrac, notamment de cuisson de légumes, par aspersion d'un fluide caloporteur, dans lequel on chauffe à une température T₁ les produits dans une ambiance sous pression P₁ supérieure à la pression atmosphérique P₀, puis l'on refroidit au moins lesdits produits sous la pression P₁ jusqu'à une température T₂ inférieure à la température T₀ d'ébullition de l'eau à la pression atmosphérique P₀, est caractérisé en ce que l'on confine lesdits produits alimentaires dans une enceinte sous pression :
- à travers laquelle dite enceinte le transport desdits produits alimentaires est réalisé par une surface en mouvement, constituée par un transporteur à bandes,
- dans laquelle dite enceinte on crée ladite surpression P₁ et on réalise les étapes suivantes :
   - on préchauffe lesdits produits alimentaires dans une première zone, par aspersion d'un fluide caloporteur liquide,
   - on chauffe lesdits produits alimentaires à ladite température T₁, dans une seconde zone contigüe à ladite première zone, par aspersion d'un fluide caloporteur liquide,
   - on refroidit lesdits produits alimentaires à ladite température T₂, dans une troisième zone, contigüe à ladite seconde zone, par aspersion d'un fluide caloporteur liquide.

L'invention a également pour objet un dispositif pour la mise en oeuvre du procédé, caractérisé par le fait qu'il comprend une enceinte apte à permettre le confinement sous pression desdits produits alimentaires, présentant :
- une surface en mouvement, constituée par un transporteur à bandes, apte à assurer le transport desdits produits alimentaires à travers ladite enceinte,
- des moyens pour générer ladite surpression P₁,
- des moyens pour préchauffer lesdits produits alimentaires dans une première zone de ladite enceinte, par aspersion d'un fluide caloporteur liquide,
- des moyens pour chauffer lesdits produits alimentaires à ladite température T₁, dans une seconde zone de ladite enceinte contigüe à ladite première zone, par aspersion d'un fluide caloporteur liquide,
- des moyens pour refroidir lesdits produits alimentaires à ladite température T₂, dans une troisième zone de ladite enceinte, contigüe à ladite seconde zone, par aspersion d'un fluide caloporteur liquide.

L'invention sera mieux comprise à la lecture de la description suivante accompagnée des dessins en annexe parmi lesquels :
- la figure 1 est une vue schématique du dispositif conforme à l'invention pour le traitement thermique de produits alimentaires en vrac, notamment de cuisson de légumes, dans lequel le fluide caloporteur utilisé est de l'eau,
- la figure 2 est une vue de coupe selon la ligne II-II de la figure 1,
- la figure 3 est une courbe qui illustre l'évolution de la température des produits alimentaires à l'intérieur de l'enceinte en fonction du temps,
- la figure 4 est une courbe qui illustre l'évolution de la pression à l'intérieur de l'enceinte en fonction du temps.

La présente invention a pour objet un procédé de traitement thermique de produits alimentaires en vrac notamment de cuisson de légumes et un dispositif conçu pour la mise en oeuvre de ce procédé.

Elle trouvera son application dans le domaine du traitement des produits alimentaires et plus particulièrement des légumes notamment dans l'industrie de la cuisson des légumes en vue de leur conservation sous forme de surgelés ou appertisés.

En outre, ce procédé a pour objet d'assurer une cuisson des produits alimentaires et notamment des légumes qui permet de préserver :
- l'intégralité géométrique de ces produits en évitant notamment l'écrasement, ou l'éclatement,
- la couleur et l'aspect de ces légumes,
- les vitamines et les sels minéraux,
- les propriétés et les qualités organoleptiques,
- les qualités bactériologiques compatibles avec de tels produits alimentaires.

Ce procédé permet également de réaliser cette opération de cuisson pour des quantités de légumes importantes en un temps limité.

Le dispositif pour la mise en oeuvre du procédé de traitement thermique des produits alimentaires en vrac, notamment la cuisson de légumes, tel qu'il sera décrit ultérieurement, comprend une enceinte 1 ici de forme cylindrique réalisée en un acier inoxydable. Cette enceinte, à titre d'exemple, peut présenter un diamètre d'environ 2 m et une longueur sensiblement de 7,50 m.

L'acier inoxydable utilisé pour sa construction présente des caractéristiques de résistance aux contraintes mécaniques et de résistance aux agressions chimiques et, notamment, à la corrosion d'une eau pouvant présenter un pH de 4.

Cette enceinte comporte une porte 2 d'entrée disposée sur tout le diamètre de manière à permettre l'accès à l'intérieur de celle-ci.

Elle est de préférence située dans la partie amont de l'enceinte 1 et elle autorise un accès sur la totalité du diamètre. Son ouverture et sa fermeture sont obtenues par des dispositifs classiques et connus actionnables de préférence manuellement.

Un sas mécanique d'introduction 3 des légumes 4 à l'intérieur de l'enceinte 1 est disposé dans la partie amont de celle-ci.

Le sas d'introduction 3 est ici constitué par un sas à barrettes appliqué par ressorts montés mobiles en rotation autour d'un axe selon une vitesse de rotation et une fréquence déterminée en étant entraîné par des moyens moteur. Ce sas 3 comporte des alvéoles 5 délimitant un logement destiné à recevoir des légumes 4 qui sont convoyés par l'intermédiaire d'un transporteur à bandes 6 dont l'extrémité aval débouche en regard d'au moins l'une des alvéoles 5.

Dans une forme de réalisation, chaque alvéole 5 sera par exemple remplie au tiers de sa capacité et, ainsi, à titre d'exemple, pour un sas 3 comprenant quatre alvéoles d'un diamètre de 400 mm montées mobiles en rotation selon une vitesse de rotation de 10 tours/mn, on obtient un traitement de 70 m³/h de légumes en vrac.

Bien entendu, la vitesse de rotation des alvéoles 5 peut être réglée et ajustée en fonction notamment de la nature du produit et du rendement désiré.

Une rampe d'alimentation en eau 7 reliée à un circuit de pompage de l'eau se terminant par des buses de pulvérisation est prévue afin d'assurer le nettoyage des alvéoles 5 après la vidange des légumes 4 qu'elles contenaient.

Par ailleurs, afin d'éviter les phénomènes de cisaillement et d'écrasement des légumes 4, des moyens mécaniques tels qu'un dispositif à balai assure le nettoyage des barrettes et de leur support.

Etant donné que la lubrification des différentes pièces mécaniques du sas 3 ne peut assurée que par l'intermédiaire de l'eau, celles-ci auront de préférence subi un traitement de surface leur conférant des propriétés de résistance à l'usure et au phénomène de corrosion.

Un sas d'évacuation 8 identique au sas d'introduction 3 est prévu dans la partie aval de l'enceinte 1 pour évacuer les légumes 4 vers l'extérieur de celle-ci.

Ce sas d'évacuation 8 est également constitué ici par un sas à barrettes appliqué par ressorts montés mobiles en rotation autour d'un axe selon une vitesse de rotation et une fréquence déterminée en étant entraîné par des moyens moteurs.

Une rampe d'alimentation 10, reliée à un circuit de pompage de l'eau, qui comporte des moyens d'aspersion est prévue afin de permettre le nettoyage de chaque alvéole 9 du sas 8 après qu'elles aient vidangé les légumes 4 qu'elles contenaient.

Un dispositif mécanique comprenant des balais est également prévu pour assurer le nettoyage des barrettes et de leur support et notamment pour enlever les légumes 4 qui se seraient déposés au moment du déchargement du sas 8 et ceci afin d'éviter les phénomènes de cisaillement et d'écrasement des légumes 4.

Pour assurer le transport des légumes 4 depuis l'extrémité d'un amont de l'enceinte 1 jusqu'à l'extrémité aval de l'enceinte 1, des moyens de transfert 11 sont prévus.

Ces moyens de transfert 11 sont ici constitués par un transporteur à bandes 12 comprenant un tapis monté sur roulettes et fixé à l'une de ses extrémités, l'autre extrémité étant libre afin d'autoriser sa dilatation. Ce transporteur à bandes 12 comporte des plaquettes en matière plastique qui doivent résister à de hautes températures et qui présentent, en outre, des dégagements pour éviter leur encrassement.

L'entraînement de ce transporteur à bandes 12 est réalisé par l'intermédiaire d'un motoréducteur qui présente, par exemple un variateur de vitesses autorisant une variation de vitesses de 1 à 5 afin de permettre notamment un déplacement de ce transporteur à bandes selon une vitesse comprise entre 0,5 et 2,5 m/mn.

Le nettoyage du tapis du transporteur à bandes 12 se fait sur le brin de retour, après l'évacuation des légumes 4, par l'intermédiaire d'une rampe d'alimentation en eau 13 reliée à des moyens de pompage et qui présente des moyens d'aspersion et de pulvérisation de l'eau.

Pour permettre l'évacuation de l'eau, les brins d'aller et de retour du transporteur à bandes 12 seront écartés afin d'autoriser la mise en place de plans inclinés favorisant l'écoulement de l'eau jusqu'à une purge 14 d'évacuation.

Dans une forme de réalisation, des moyens de transfert des déchets depuis l'extrémité amont de l'enceinte 1 jusqu'à l'extrémité aval de celle-ci sont prévus. Ces moyens 15 de transfert des déchets sont constitués par une surface en mouvement telle qu'un transporteur à bandes 16 identique au transporteur à bandes 12. Celui-ci sera animé d'une vitesse linéaire de 4 à 5 m/mn sans variation de vitesse et dont l'avancement sera de préférence synchronisé avec celui du transporteur à bandes 12.

Le nettoyage des brins constituant ce transporteur à bandes 16 s'effectue sur les brins de retour de celui-ci après qu'il ait transporté les déchets vers la purge 14 pour que ceux-ci puissent l'évacuer en même temps que le fluide destiné au préchauffage comme il sera décrit ultérieurement.

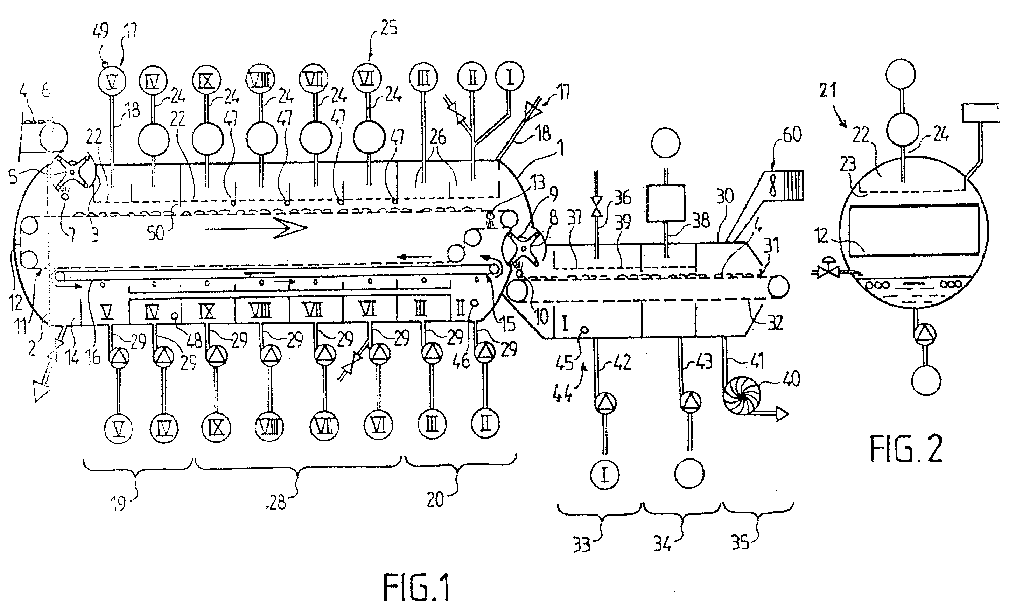

Selon l'invention, ce dispositif comprend des moyens pour générer une surpression P₁ supérieure à la pression atmosphérique P₀ à l'intérieur de l'enceinte 1. Ces moyens 17 pour générer une surpression à l'intérieur de l'enceinte sont constitués par exemple par une canalisation 18 communiquant avec des moyens pour comprimer et injecter un gaz sous pression, tel que de l'air comprimé ou un gaz inerte, et qui débouche à l'intérieur de l'enceinte 1. Dans la forme de réalisation illustrée à la figure 1, cette introduction de gaz sous pression s'effectue dans une zone 19 appelée "zone de préchauffage" de sorte que l'ensemble de l'enceinte 1 sera soumise à cette ambiance de surpression.

Le dispositif conforme à l'invention comporte également des moyens 21 pour chauffer les légumes 4 à une température T₁ sous une pression P₁ supérieure à la pression atmosphérique P₀. Ces moyens 21 sont, comme plus particulièrement illustrés à la figure 2, constitués par des paniers d'arrosage 22 alimentés en fluide caloporteur et qui présentent sur au moins une partie de leur surface des perforations 23 en vue d'assurer une aspersion des légumes 4 par le fluide caloporteur constitué ici par de l'eau portée à la température voulue.

Pour permettre une aspersion régulière et homogène des légumes afin d'obtenir une cuisson régulière de ceux-ci, on régule la quantité d'eau contenue dans le panier d'arrosage 22 afin que celui-ci présente un niveau d'eau déterminé quasiment constant.

L'alimentation en fluide caloporteur constitué par de l'eau portée à la température désignée s'effectue par l'intermédiaire d'une canalisation 24 qui débouche au regard du panier d'arrosage 22 après avoir traversé la paroi de l'enceinte 1. Cette canalisation 24 est reliée à des moyens de pompage et de circulation du fluide caloporteur selon un cycle qui sera décrit ultérieurement.

Des moyens 25 pour refroidir les légumes 4 à l'intérieur de l'enceinte 1 à une température T₂ inférieure à la température T₀ d'ébullition à la pression atmosphérique P₀ sous une pression P₁ sont également prévus. Ces moyens 25 sont constitués par des paniers d'arrosage 26 alimentés en fluide caloporteur constitués par de l'eau portée à une température déterminée dont au moins une partie de leur surface comporte des perforations en vue d'assurer une aspersion des légumes 4.

Ces paniers 26 sont alimentés en eau par l'intermédiaire de canalisations 27 reliées par des moyens de pompage à un circuit de circulation de l'eau et qui débouchent au regard du panier 26 après avoir traversé un orifice ménagé dans la paroi de l'enceinte 1.

Pour permettre l'évacuation de l'eau qui est portée à différentes températures pour assurer un gradient de cuisson et de refroidissement des légumes selon leur position en fonction de la zone 19 de pré-chauffage, la zone 28 de "chauffage" ou bien la zone 20 de prérefroidissement de l'enceinte 1, des canalisations débouchant en regard des moyens de chauffage 21 et des moyens pour refroidir 25 sont prévus pour assurer une circulation de l'eau selon un trajet régulé comme il sera décrit ultérieurement.

En outre, dans la forme de réalisation illustrée la zone de pré-chauffage 19 comporte deux paniers d'arrosage 22 qui sont alimentés respectivement en eau portée à la température notamment de 50°C et 70°C. La zone de chauffage 28 comporte quatre paniers d'ancrage 22 alimentés par de l'eau portée notamment à 90°C - 100°C - 110°C et 120°C.

La zone de pré-refroidissement 20 de l'enceinte comporte deux paniers d'arrosage 26 alimentés respectivement en eau notamment portée à 80°C et 50°C.

Pour assurer la circulation de l'eau, des pompes non représentées sont prévues et, de préférence, l'on prévoit deux pompes au niveau de la zone de préchauffage 19, quatre pompes au niveau de la zone de chauffage 28, et deux pompes au niveau de la zone 20 de pré-refroidissement.

Ces pompes présentent des capacités manométriques déterminées permettant notamment l'aspiration selon qu'une pression déterminée tout en étant prévues pour assurer le pompage de l'eau portée jusqu'à une température notamment de 120 °C. Les débits relatifs de chaque pompe seront de préférence compris entre 20 et 30 m³/m² de tapis arrosé.

La répartition de l'eau s'effectuant par l'intermédiaire des perforations 23 des paniers d'arrosage 22 et 26 qui assure un ruissellement et une aspersion du fluide sur les légumes 4.

A la sortie aval de l'enceinte 1, après leur passage dans le sas 8, les légumes 4 débouchent à l'intérieur d'une enceinte 30. Cette enceinte 30 présente une extrémité amont qui comporte une ouverture permettant l'introduction des légumes à l'intérieur et, une extrémité aval qui présente également une ouverture en vue d'assurer la sortie de ces légumes 4.

Le transport des légumes 4 à l'intérieur de l'enceinte 30 s'effectue par l'intermédiaire de moyens de transfert 31 constitués par une surface en mouvement telle qu'un transporteur à bandes 32.

Ce transporteur à bandes 32 est, dans une forme de réalisation, identique au transporteur 16 et au transporteur 12 et le nettoyage de son tapis s'effectue par l'intermédiaire d'une rampe située sur le retour de celui-ci après le déchargement des légumes 4.

Cette enceinte 30 comporte une zone 33 de "refroidissement" des légumes, une zone 34 permettant l'introduction d'adjuvants et/ou d'ingrédients tels que par exemple du sel et enfin une zone 35 destinée à égoutter les légumes 4.

Cette enceinte 30 est une enceinte à l'intérieur de laquelle règne une pression P₀ identique à la pression atmosphérique et elle est destinée à permettre le transport des légumes 4 depuis l'enceinte 1 jusqu'à un tunnel de surgélation pour réaliser le traitement final des légumes 4 préalablement à leur commercialisation.

Le refroidissement des légumes 4 portés à la température T₂ jusqu'à une température T₀ s'effectue par l'aspersion d'eau froide par l'intermédiaire d'une canalisation 36 débouchant dans un panier d'arrosage 37 en vue d'asperger les légumes 4.

La mise en place de condiments et/ou d'adjuvants, tels que par exemple du sel, réalisée à l'intérieur dans la zone 34 de l'enceinte 30 s'effectue par l'intermédiaire d'une canalisation 38 qui débouche en regard d'un panier 39 dont au moins une partie de sa surface comporte des perforations en vue de permettre la mise en place du sel sur les légumes 4.

L'égouttage des légumes 4 est réalisé dans la zone 35 de l'enceinte 30 par l'intermédiaire d'un ventilateur 40 qui communique avec l'enceinte 30 par l'intermédiaire d'une canalisation 41 débouchant à l'intérieur de celle-ci. L'air aspiré par le ventilateur est préalablement filtré dans un caisson de filtration 60 pour éviter toute contamination bactériologique.

Pour permettre l'évacuation de l'eau de refroidissement introduite par la canalisation 36, dans la zone 33, une canalisation 42 est prévue. De même, pour récupérer le trop-plein d'adjuvants introduits par la canalisation 38, une canalisation 43 est également prévue en débouchant à l'intérieur de l'enceinte 30 et en communiquant avec l'extérieur.

Des moyens de contrôle des différents paramètres assurant une cuisson homogène et régulière des légumes 4 sont prévus. Ces moyens de contrôle 44 sont par exemple constitués par une sonde 45 de température disposée dans la zone 33 de l'enceinte 30 pour déterminer la température T₂ de sortie de l'enceinte 1 des légumes 4. Cette sonde de température 45 permet, en outre, par l'intermédiaire de moyens de contrôle et de régulation de déterminer la température et la quantité d'eau froide à introduire pour refroidir les légumes 4. C'est ainsi que, dans une forme préférentielle de réalisation, le débit d'eau froide à l'intérieur de la zone 33 de l'enceinte 30 sera d'environ de 1 à 1,5 m³/tonnes de produits.

Bien entendu, il faut que cette sonde n'entrave pas la libre circulation des légumes. C'est la raison pour laquelle, l'on utilisera de préférence une sonde autre qu'une sonde de contact.

Une sonde de température 46 est également disposée dans la zone 20 de l'enceinte 1. Cette sonde 46 permet, en outre, de contrôler que les légumes 4 ne dépassent pas la température T₂ désirée.

Dans la forme de réalisation illustrée à la figure 1, la zone de chauffage 28 comporte quatre paniers d'arrosage 22 et, un capteur 47 de température est disposé en amont de chacun de ceux-ci afin de contrôler la température du fluide caloporteur comprise notamment entre 50°C et 120°C.

Un capteur de température 47 est également prévu au niveau de la zone 19 pour permettre une détermination de la température de l'eau de préchauffage située dans un réservoir non représenté. Ce capteur 47 assure ainsi un maintien à la température minimale voulue de cette eau de préchauffage.

Les moyens de contrôle 44 comportent également des moyens 49 de régulation de la pression à l'intérieur de l'enceinte sous une pression comprise par exemple entre 0 et 2 bars. Etant donné que l'air comprimé doit être propre, c'est-à-dire en outre, sans huile ou autres agents non désirés en raison du caractère alimentaire des produits à cuire, on prévoit de préférence un compresseur à palettes à sec dont le débit maximal correspond approximativement au débit des sas.

Des moyens de contrôle sont également prévus pour contrôler et réguler la vitesse de déplacement sur les transporteurs 12 et 16 des légumes 4 et, notamment, par l'intermédiaire du contrôle du couple des motoréducteurs d'entraînement des différents moyens de transfert 11-15.

Le contrôle et la régulation du fonctionnement de ces différents moyens de contrôle sont de préférence réalisée par l'intermédiaire de moyens informatiques tels qu'un automate non représenté.

En outre, cet automate devra prendre en considération des paramètres de programmation concernant le temps, la température de cuisson ou de blanchiment des légumes 4, la température de préchauffage, la température de pré-refroidissement, la température de sortie des légumes 4, la régulation de la circulation des fluides ainsi, que le débit et le rendement désirés.

Par ailleurs, d'autres paramètres relatifs à la qualité du produit c'est-à-dire notamment à l'intégralité de ses propriétés géométriques, de sa couleur, de ses vitamines et les sels minéraux ainsi que les qualités organoleptiques et bactériologiques du légume 4 seront également pris en considération.

L'automate prendra également en gestion la circulation et le contrôle du cycle du fluide caloporteur qui s'effectuera selon un cycle décrit ultérieurement.

Des moyens tels qu'une alarme sont prévus afin de permettre une indication sur la défaillance de fonctionnement de l'une des parties du dispositif.

A l'intérieur de l'enceinte 1, sont prévues, de préférence, des cloisons 50 permettant de délimiter les différentes zones 19, 28 et 20. Ces cloisons sont constituées par exemple par un matériau tel que de l'acier inoxydable et elle présente une ouverture permettant le passage des moyens de transfert 11-15.

En outre, étant données les nécessités de réaliser la cuisson de ces produits alimentaires selon des critères d'hygiène très stricts, une attention particulière a été apportée à la conception de l'ensemble de l'enceinte 1 et notamment des cloisons 50 afin qu'elle ne présente pas d'angle susceptible de générer une rétention de matières végétales.

L'invention a également pour objet un procédé pour la mise en oeuvre du dispositif qui a été décrit ci-dessus. Ce procédé de traitement thermique de produits alimentaires en vrac notamment de cuisson de légumes 4 consiste à chauffer à une température T₁ les légumes 4 dans une ambiance sous une pression P₁ supérieure à la pression P₀ atmosphérique.

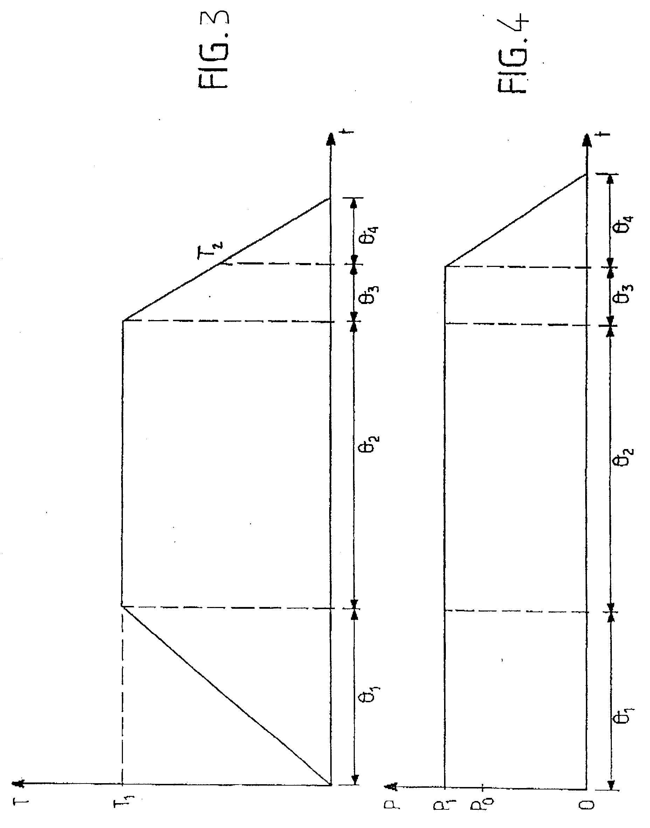

Selon l'invention, l'on refroidit au moins les légumes 4 sous une pression P₁ jusqu'à une température T₂ inférieure à la température T₀ d'ébullition à la pression atmosphérique P₀ comme cela est plus particulièrement illustré aux figures 3 et 4.

Dans une forme de réalisation de ce procédé, on chauffe les légumes 4 en les confinant à l'intérieur de l'enceinte 1 sous une pression P₁ dans laquelle on crée une surpression et on les soumet à une aspersion d'un fluide caloporteur ici constitué par de l'eau portée à différentes températures en fonction des étapes.

C'est ainsi, que l'on soumet, les légumes 4 après leur introduction à l'intérieur de l'enceinte 1 à une étape de préchauffage dans laquelle on introduit les légumes 4 et on les asperge par l'intermédiaire d'eau portée à une température notamment comprise entre 50 et 70°C.

Puis, on soumet, les légumes, à une étape de chauffage à l'intérieur de l'enceinte 1 dans la zone 28 en les aspergeant successivement par des fluides caloporteurs portés à une température notamment comprise entre 70 et 120 °C de manière à porter ces légumes 4 à la température T₁ de cuisson.

Cette opération de préchauffage et de chauffage des légumes 4 s'effectue à l'intérieur de l'enceinte 1 sous une pression P₁ supérieure à la pression atmosphérique P₀.

Selon l'invention, on soumet ensuite, les légumes 4 à une étape de refroidissement en les confinant à l'intérieur de l'enceinte 1 sous une pression T₁ supérieure à la pression atmosphérique et en les aspergeant par un fluide caloporteur constitué par de l'eau portée à une température notamment comprise entre 50 et 70°C de manière à ce qu'ils atteignent une température T₂ inférieure à la température T₀ d'ébullition de l'eau a la pression atmosphérique P₀.

Ainsi, grâce à cette opération, on évite les phénomènes de destruction de la structure du légume 4. Par ailleurs, on obtient une cuisson régulière et homogène de ces légumes 4 ce qui permet d'obtenir ensuite un produit surgelé de qualité.

En outre, on réalise le traitement thermique des aliments selon une courbe de températures telle qu'illustrée à la figure 3, en fonction du temps qui est continu et sans à-coup pour obtenir le résultat désiré c'est-à-dire une cuisson homogène et régulière des légumes 4 en vrac.

Dans ce procédé, on régule la circulation du fluide caloporteur constitué par de l'eau en fonction de sa température. C'est ainsi, que le remplissage et le contrôle de niveau du fluide caloporteur dans les zones II, III, IV et V se fera dans la zone II. En outre, en fonction de la température, la circulation du fluide s'effectuera depuis la zone II vers la zone III puis vers la zone IV et enfin vers la zone V avec une régulation de niveau entre les zones.

En phase de remplissage, l'ouverture d'une vanne d'arrivée d'eau est commandée par une sonde, non représentée, disposée au niveau de la zone II et l'arrêt s'effectue par une sonde, également non représentée, disposée au niveau de la zone V.

Le remplissage et le contrôle de niveau des zones VI, VII, VIII et IX seront faits par des sondes de niveau disposées sur la zone VI pour l'ouverture de la vanne et par une sonde de niveau disposée sur la zone IX assurant la fermeture de la dite vanne.

La correspondance entre les zones VI, VII, VIII et IX se fait par trop-plein, le trop-plein de la zone IX étant refoulé vers la zone IV.

La vidange de l'ensemble de ces différentes zones est effectuée par des vannes manuelles disposées notamment sur l'aspiration des pompes c'est-à-dire au niveau des points bas des différentes zones considérées.

Dans ce procédé, on régule, en fonction des différents paramètres tels que la température, la pression, et le temps de cuisson des légumes 4, le fonctionnement de l'ensemble des moyens du dispositif. Cette régulation est réalisée par l'intermédiaire de moyens informatiques d'un type classique et connu, adaptés spécifiquement à une telle application.

On prévoit également, un cycle de nettoyage intégré dans les moyens informatiques de manière à permettre le nettoyage de l'ensemble du dispositif dans des conditions permettant la cuisson de produits alimentaires respectant les règles d'hygiène imposées pour de tels produits.

Dans ce procédé, à la sortie de l'enceinte 1, les légumes 4 se trouvent à la température T₂ inférieure à la température T₀ d'ébullition à la pression atmosphérique P₀, on les introduit à l'intérieur d'une enceinte 30 afin de les refroidir complètement en les faisant subir une étape de refroidissement. Pour cela, on asperge les aliments à la température T₂ par de l'eau froide afin qu'ils atteignent une température T₀ avoisinant notamment les 25 à 30°C sous une pression atmosphérique P₀.

Dans une forme de réalisation de ce procédé, on introduit également sur ces légumes 4 des condiments et des adjuvants en les soumettant à une pulvérisation de sel par exemple et, ensuite, on les sèche à l'intérieur de l'enceinte 30 par l'intermédiaire d'air de manière à les égoutter préalablement à leur traitement de surgélation.

## Revendications

1. Procédé de traitement thermique en continu de produits alimentaires en vrac, notamment de cuisson de légumes, par aspersion d'un fluide caloporteur, dans lequel on chauffe à une température T₁ les produits (4) dans une ambiance sous pression P₁ supérieure à la pression atmosphérique P₀, puis l'on refroidit au moins lesdits produits (4) sous la pression P₁ jusqu'à une température T₂ inférieure à la température T₀ d'ébullition de l'eau à la pression atmosphérique P₀, caractérisé en ce que l'on confine lesdits produits alimentaires (4) dans une enceinte (1) sous pression :
- à travers laquelle dite enceinte (1) le transport desdits produits alimentaires (4) est réalisé par une surface en mouvement (12), constituée par un transporteur à bandes,
- dans laquelle dite enceinte (1) on crée ladite surpression P₁ et on réalise les étapes suivantes :
- on préchauffe lesdits produits alimentaires (4), dans une première zone (19), par aspersion d'un fluide caloporteur liquide,
- on chauffe lesdits produits alimentaires (4) à ladite température T₁ dans une seconde zone (28) contigüe à ladite première zone (19), par aspersion d'un fluide caloporteur liquide,
- on refroidit lesdits produits alimentaires (4) à ladite température T₂, dans une troisième zone (20), contigüe à ladite seconde zone (28), par aspersion d'un fluide caloporteur liquide.

2. Procédé selon la revendication 1, caractérisé en ce que l'on régule la circulation des fluides caloporteurs en fonction dé sa température.

3. Procédé selon la revendication 1, caractérisé en ce que l'on réalise le traitement thermique des produits alimentaires (4) selon une courbe de température qui évolue en fonction du temps de manière continue et sans à-coups.

4. Dispositif pour la mise en oeuvre du procédé, selon la revendication 1, de traitement thermique en continu de produits alimentaires en vrac, notamment de cuisson de légumes, par aspersion d'un fluide caloporteur, dans lequel on chauffe à une température T₁ les produits (4) dans une ambiance sous pression P₁ supérieure à la pression atmosphérique P₀ puis l'on refroidit au moins lesdits produits (4) sous la pression P₁ jusqu'à une température T₂ inférieure à la température T₀ d'ébullition de l'eau à la pression atmosphérique P₀, caractérisé par le fait qu'il comprend une enceinte (1) apte à permettre le confinement sous pression desdits produits alimentaires présentant :
- une surface en mouvement (12), constituée par un transporteur à bandes, apte à assurer le transport desdits produits alimentaires (4) à travers ladite enceinte (1),
- des moyens (17) pour générer ladite surpression P₁,
- des moyens pour préchauffer lesdits produits alimentaires (5) dans une première zone (19) de ladite enceinte (1), par aspersion d'un fluide caloporteur liquide,
- des moyens (21) pour chauffer lesdits produits alimentaires (4) à ladite température T₁, dans une seconde zone (28) de ladite enceinte (1), contigüe à ladite première zone (19), par aspersion d'un fluide caloporteur liquide,
- des moyens (25) pour refroidir lesdits produits alimentaires (4) à ladite température T₂, dans une troisième zone (20) de ladite enceinte (1), contigüe à ladite seconde zone (28), par aspersion d'un fluide caloporteur liquide.

5. Dispositif selon la revendication 4, caractérisé en ce que l'enceinte (1) comporte des moyens de communication avec l'extérieur constitués par un sas d'introduction (3) et un sas de sortie (8) et des moyens de transfert (11) des produits alimentaires (4) à l'intérieur de l'enceinte constitués par ladite surface en mouvement sur laquelle sont disposées des bandes transporteuses.

6. Dispositif selon la revendication 4, caractérisé en ce que les moyens (21) pour chauffer lesdits produits alimentaires (4) sont constitués par des paniers d'arrosage (22) alimentés en fluide caloporteur dont au moins une partie de leur surface comporte des perforations (23) en vue d'assurer une aspersion desdits produits alimentaires (4).

7. Dispositif selon la revendication 4, caractérisé en ce que les moyens (25) pour refroidir lesdits produits alimentaires (4) sont constitués par des paniers d'arrosage (26) alimentés en fluide caloporteur dont au moins une partie de leur surface comporte des perforations en vue d'assurer une aspersion desdits produits alimentaires (4).

8. Dispositif selon la revendication 4, caractérisé en ce que l'enceinte (1) comporte trois compartiments constitués par les zones de chauffage (19, 28) et la zone de refroidissement (20).

9. Dispositif selon la revendication 8, caractérisé en ce que les compartiments sont séparés par des cloisons (53) communiquant par un sas.

10. Dispositif selon la revendication 4, caractérisé en ce qu'il comporte des moyens de contrôle (44) et de régulation des paramètres de fonctionnement et/ou de la qualité des produits alimentaires (4).

11. Dispositif selon la revendication 4, caractérisé en ce que l'enceinte (1) comporte différents compartiments d'aspersion qui présentent chacun leur circuit d'alimentation en fluide caloporteur liquide.

## Claims

1. Process for the continuous heat treatment of foodstuffs in bulk, in particular for cooking vegetables, by sprinkling a heat carrier fluid, in which the foodstuffs (4) are heated at a temperature T₁ in an environment at a pressure P₁ higher than the atmospheric pressure P₀, and then at least the said foodstuffs (4) are cooled at pressure P₁ to a temperature T₂ lower than the boiling point temperature T₀ of water at atmospheric pressure P₀, characterised in that the said foodstuffs (4) are confined in a pressurised container (1) :
- through which said container (1), the transport of the said foodstuffs (4) is accomplished by a moving surface (12), constituted by a belt conveyor ;
- in which said container (1) the said over-pressure P₁ is created and the following steps are performed :
- the said foodstuffs (4) are pre-heated, in a first area (19), by sprinkling a liquid heat carrier fluid ;
- the said foodstuffs (4) are heated at the said temperature T₁, in a second area (28), contiguous with the said first area (19), by sprinkling a liquid heat carrier fluid ;
- the said foodstuffs (4) are cooled to the said temperature T_{2,} in a third area (20), contiguous with the said second area (28), by sprinkling a liquid heat carrier fluid.

2. Process according to claim 1, characterised in that the circulation of the heat carrier fluids is regulated as a function of their temperatures.

3. Process according to claim 1, characterised in that the heat treatment of the foodstuffs (4) is carried out following a temperature curve that evolves continuously and smoothly as a function of time.

4. Device for implementing the process, according to claim 1, for the continuous heat treatment of foodstuffs in bulk, in particular for cooking vegetables, by sprinkling a heat carrier fluid, in which the foodstuffs (4) are heated at a temperature T₁ in an environment at a pressure P₁ higher than the atmospheric pressure P₀, and then at least the said foodstuffs (4) are cooled at pressure P₁ to a temperature T₂ lower than the boiling point temperature T₀ of water at atmospheric pressure P₀, characterised by the fact that it includes a container (1) capable of permitting the containment under pressure of the said foodstuffs, having :
- a moving surface (12), constituted by a belt conveyor, capable of ensuring the transport of the said foodstuffs (4) through the said container (1) ;
- means (17) for generating the said over-pressure P₁ ;
- means for pre-heating the said foodstuffs (4) in a first area (19) of the said container (1), by sprinkling a liquid food carrier fluid ;
- means (21) for heating the said foodstuffs (4) at the said temperature T₁, in a second area (28) of the said container (1), contiguous with the said first area (19), by sprinkling a liquid heat carrier fluid ;
- means (25) for cooling the said foodstuffs (4) to the said temperature T₂, in a third area (20) of the said container (1), contiguous with the said second area (28), by sprinkling a liquid heat carrier fluid.

5. Device according to claim 4, characterised in that the container (1) comprises means for communication with the exterior, constituted by an input lock (3) and an output lock (8) and means (11) for transferring the foodstuffs (4) inside the container constituted by the said moving surface on which are disposed conveyor belts.

6. Device according to claim 4, characterised in that the means (21) for heating the said foodstuffs (4) are constituted by sprinkling baskets (22) supplied with heat carrier fluid and whereof at least a part of their surface comprises perforations (23) with a view to ensuring sprinkling of the said foodstuffs (4).

7. Device according to claim 4, characterised in that the means (25) for cooling the said foodstuffs (4) are constituted by sprinkling baskets (26) supplied with heat carrier fluid and whereof at least a part of their surface comprises perforations with a view to ensuring sprinkling of the said foodstuffs (4).

8. Device according to claim 4, characterised in that the container (1) comprises three compartments constituted by heating areas (19, 28) and the cooling area (20).

9. Device according to claim 8, characterised in that the compartments are separated by partitions (53) communicating via a lock.

10. Device according to claim 4, characterised in that it comprises means (44) for monitoring and regulating the parameters of operation and/or of the quality of the foodstuffs (4).

11. Device according to claim 4, characterised in that the container (1) comprises different sprinkling compartments which each have their own liquid heat carrier fluid supply circuit.

## Patentansprüche

1. Verfahren zur kontinuierlichen Wärmebehandlung von losen Nährungsmitteln, nämlich zum Kochen von Gemüsen, durch Besprühung mit einer wärmeabführenden Flüssigkeit, bei dem die Produkte (4) in einer unter einem Druck P₁, der höher ist als der Luftdruck P₀, stehenden Umgebung auf eine Temperatur T₁ erwärmt, anschließend wenigstens die genannten, unter dem Druck P₁ stehenden Produkte (4) bis auf eine Temperatur T₂, die niedriger ist als die Siedetemperatur T₀ von Wasser bei Luftdruck P₀, gekühlt werden, dadurch gekennzeichnet, daß die genannten Nährungsmittel (4) in einer unter Druck stehenden Kammer (1) eingeschlossen sind:
- wobei die Förderung der genannten Nährungsmittel (4) durch die genannte Kammer (1) über eine sich fortbewegende Fläche (12) erfolgt, die aus einem Bandförderer besteht,
- wobei in der genannten Kammer (1) der genannte Überdruck P₁ erzeugt wird und die folgenden Schritte durchgeführt werden:
- die genannten Nährungsmittel (4) werden in einem ersten Bereich (19) durch Besprühung mit einer wärmeabführenden Flüssigkeit vorgewärmt,
- die genannten Nährungsmittel (4) werden in einem zweiten, an den genannten ersten Bereich (19) angrenzenden Bereich (28) durch Besprühung mit einer wärmeabführenden Flüssigkeit auf die genannte Temperatur T₁ erwärmt,
- die genannten Nährungsmittel (4) werden in einem dritten, an den genannten zweiten Bereich (28) angrenzenden Bereich (20) durch Besprühung mit einer wärmeabführenden Flüssigkeit auf die genannte Temperatur T₂ abgekühlt.

2. Verfahren nach Anspruch 1, dadurch gekennzeichnet, daß der Umlauf der wärmeabführenden Flüssigkeiten in Abhängigkeit von seiner Temperatur reguliert wird.

3. Verfahren nach Anspruch 1, dadurch gekennzeichnet, daß die Wärmebehandlung der Nährungsmittel (4) gemäß einer Temperaturkurve durchgeführt wird, die zeitmäßig kontinuierlich und stufenlos verläuft.

4. Vorrichtung zur Anwendung des Verfahrens nach Anspruch 1 zur kontinuierlichen Wärmebehandlung von losen Nährungsmitteln, nämlich zum Kochen von Gemüsen, durch Besprühung mit einer wärmeabführenden Flüssigkeit, bei der die Produkte (4) in einer unter einem Druck P₁, der höher ist als der Luftdruck P₀, stehenden Umgebung auf eine Temperatur T₁ erwärmt, anschließend wenigstens die genannten, unter dem Druck P₁ stehenden Produkte (4) bis auf eine Temperatur T₂, die niedriger ist als die Siedetemperatur T₀ von Wasser bei Luftdruck P₀, gekühlt werden, dadurch gekennzeichnet, daß sie eine Kammer (1) umfaßt, die geeignet ist, das Einschließen unter Druck der genannten Nährungsmittel zu erlauben und:
- eine sich fortbewegende Fläche (12), die aus einem Bandförderer besteht, die geeignet ist, die Förderung der genannten Nährungsmittel (4) durch die genannte Kammer (1) zu sichern,
- Mittel (17) zum Erzeugen des genannten Überdrucks P₁,
- Mittel, um die genannten Nährungsmittel (5) in einem ersten Bereich (19) der genannten Kammer (1) durch Besprühung mit einer wärmeabführenden Flüssigkeit vorzuwärmen,
- Mittel (21), um die genannten Nährungsmittel (4) in einem zweiten, an den genannten ersten Bereich (19) angrenzenden Bereich (28) der genannten Kammer (1) durch Besprühung mit einer wärmeabführenden Flüssigkeit auf die genannte Temperatur T₁ zu erwärmen,
- Mittel (25), um die genannten Nährungsmittel (4) in einem dritten, an den genannten zweiten Bereich (28) angrenzenden Bereich (20) der genannten Kammer (1) durch Besprühung mit einer wärmeabführenden Flüssigkeit auf die genannte Temperatur T₂ abzukühlen,
aufweist.

5. Vorrichtung nach Anspruch 4, dadurch gekennzeichnet, daß die Kammer (1) Mittel zur Verbindung mit der Außenseite umfaßt, die aus einer Einfuhrschleuse (3) und einer Ausgangsschleuse (8) und Transfermitteln (1) für die Nährungsmittel (4) innerhalb der Kammer bestehen, die aus der genannten sich fortbewegenden Fläche bestehen, auf der Förderbänder angeordnet sind.

6. Vorrichtung nach Anspruch 4, dadurch gekennzeichnet, daß die Mittel (21) zum Erwärmen der genannten Nährungsmittel (4) aus mit wärmeabführender Flüssigkeit versorgten Sprühkörben (22) bestehen, von denen wenigstens ein Teil der Oberfläche Löcher (22) umfaßt, um eine Besprühung der genannten Nährungsmittel (4) zu sichern.

7. Vorrichtung nach Anspruch 4, dadurch gekennzeichnet, daß die Mittel (25) zum Abkühlen der genannten Nährungsmittel (4) aus mit wärmeabführender Flüssigkeit versorgten Sprühkörben (26) bestehen, von denen wenigstens ein Teil der Oberfläche Löcher umfaßt, um eine Besprühung der genannten Nährungsmittel (4) zu sichern.

8. Vorrichtung nach Anspruch 4, dadurch gekennzeichnet, daß die Kammer (1) drei Fächer umfaßt, die aus den Heizungsbereichen (19, 28) und dem Kühlungsbereich (20) bestehen.

9. Vorrichtung nach Anspruch 8, dadurch gekennzeichnet, daß die Fächer mittels über eine Schleuse miteinander in Verbindung stehender Trennwände voneinander getrennt sind.

10. Vorrichtung nach Anspruch 4, dadurch gekennzeichnet, daß sie Mittel zum Überwachen (44) und Regulieren der Betriebsparameter und/oder der Qualität der Nährungsmittel (4) umfaßt.

11. Vorrichtung nach Anspruch 4, dadurch gekennzeichnet, daß die Kammer (1) verschiedene Besprühungskammern umfaßt, die jeweils einen wärmeabführenden Flüssigkeitszufuhrkreis aufweisen.
